# EUROPEAN PATENT APPLICATION

(11) **EP 4 729 278 A1**
(43) Date of publication of application: **22.04.2026**
(21) Application number: 25207211.1
(22) Date of filing: 07.10.2025
(51) Int. Cl.: B29D 30/00, B60C 23/04, G01M 17/02

(54) **METHOD FOR MOUNTING A SENSOR ON THE INNERLINER OF A TIRE AND TIRE**

(30) Priority: 17.10.2024 US 202463708280 P; 17.09.2025 US 202519331362
(71) Applicant: The Goodyear Tire & Rubber Company, Akron, OH 44316 (US)
(72) Inventor: ZHAO, Junling, Hudson, 44236 (US); WEST, Jeffrey McKay, Uniontown, 44685 (US); SUH, Peter Jung-min, Copley, 44321 (US); KESTNER, Michael William, Canton, 44708 (US); HILGER, Stephan Peter, 4770 Medell (BE); BUCHER, Frank, 54329 Konz (DE)
(74) Representative: Kutsch, Bernd

(57) **Abstract**

A method is disclosed comprising: affixing a first textured material (113) to an innerliner (106) of a tire (100); affixing a second textured material (123) to a sensor unit (133); and mounting the sensor unit (133) on the innerliner (106) of the tire (100) by fastening the first textured material (113) to the second textured material (123) via a touch fastener configuration. Also, a tire (100) is disclosed comprising an innerliner (106), a sensor unit (133), a first textured material affixed to the innerliner (113), and a second textured material (123) affixed to the sensor unit (133) and the first textured material (133), wherein the sensor unit (133) is mounted on the innerliner (106) of the tire (100) by fastening the first textured material (113) to the second textured material (123) via a touch fastener configuration.

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often it is desirable to collect electronic data about the conditions in and around the tire. Such data can be communicated to the various different electronic systems of the vehicle, such as vehicle stability and/or braking systems, in order to provide improved control of the vehicle as well as to monitor or track driving behavior.

### SUMMARY OF THE INVENTION

The invention relates to a method in accordance with claim 1 and to a tire in accordance with claim 9.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a cross-sectional perspective view of a tire, with a sensor unit mounted to the innerliner of a tire according to various embodiments of the present invention.

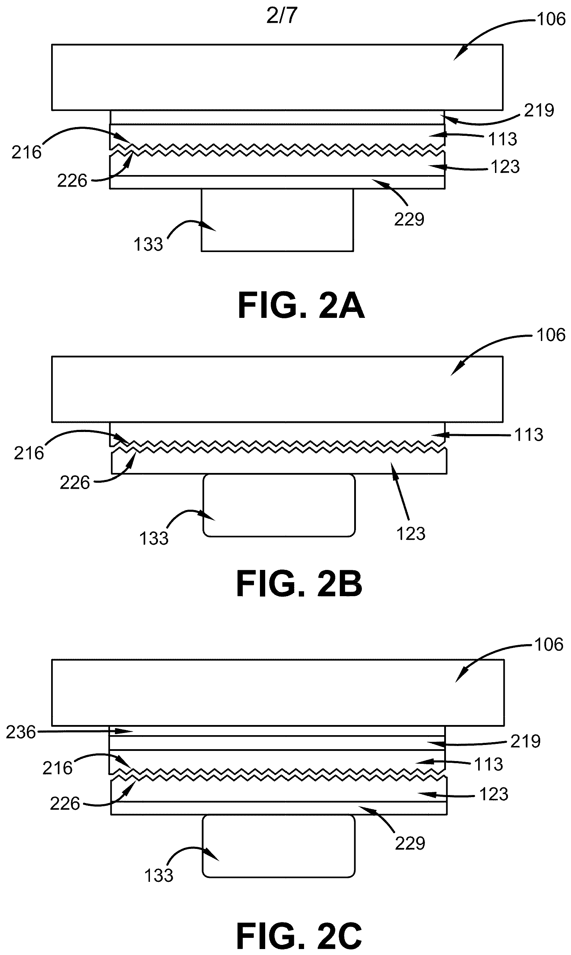

FIGS. 2A-2C are examples of an exploded view of a mounted sensor unit according to various embodiments of the present invention. FIG. 2A illustrates a sensor mounted to the innerliner of a tire using two adhesives attached to two textured materials of any one of the described touch fastener configurations. FIG. 2B illustrates the two textured materials including any one of the touch fastener configurations described herein being affixed directly to the innerliner of the tire and the sensor unit. FIG. 2C illustrates a configuration similar to FIG. 2A with two adhesive layers but with an added cushion layer between the innerliner of the tire and the first adhesive.
FIGS. 3A-3E are various examples of texture configurations of touch fasteners according to various embodiments of the present invention. FIG. 3A illustrates a mushroom configuration. FIG. 3B illustrates a woven hook and loop configuration. FIG. 3C depicts a knitted loop configuration. FIG. 3D depicts a palm tree configuration. FIG. 3E depicts a double-sided configuration.
FIGS. 4A and 4B show experimental results of the effect of various touch fastener configurations and/or adhesive techniques on pull-out forces according to various embodiments of the present invention.
FIG. 5 is a flowchart illustrating the method of mounting a sensor unit on an innerliner of a tire according to various embodiments of the present invention.
FIGS. 6A-6E illustrate graphical representations of the peel strength of touch fastener configurations of a hook fastener against a loop fastener cured on an innerliner compound over various experiments using different experimental parameters according to various embodiments.
FIG. 7 illustrates a graphical representation comparing the results of the different experiments.

### DEFINITIONS

"Carcass" means the tire structure apart from the belt structure, tread, undertread, and sidewall rubber over the plies, but including the beads.

"Innerliner" means the layer or layers of elastomer or other material that form the inside surface of a tubeless tire and that contain the inflating fluid within the tire.

"Radially outward" and "radially outwardly" refer to a radial direction that is away from the central axis of rotation of the tire.

"Radial" and "radially" mean lines or directions that are perpendicular to the axis of rotation of the tire.

### DETAILED DESCRIPTION OF PREFERRED EMBODIMENTS OF THE INVENTION

Disclosed herein are various examples related to systems and methods for mounting sensors on an innerliner of a tire. In one example, a first textured material is affixed to the innerliner of the tire. A second textured material is affixed to the sensor unit. The sensor unit can be mounted on the innerliner of the tire by fastening the first textured material to the second textured material via a touch fastener configuration. By using the touch fastener configuration to affix the sensor unit on the tire, in some embodiments, the need to buff the tire to install the sensor unit is eliminated. Therefore, it is easier to install sensor units using the method described herein. With the textured materials as compared to traditional methods of sensor attachment, there is no requirement of a sensor container. While there can be embodiments in which the sensor container is advantageous, it would not be a requirement when using the technique described within this invention.

The use of the touch fastener configurations allows two surfaces to be fastened and unfastened. Advantageously, the sensor unit can be easily replaced. This allows the sensor unit to be easily removed to retread the tires without endangering the integrity of the sensor unit. A sensor unit can easily be attached by following the method described in the present invention. The touch fastener configuration, while capable of being easily undone, offers a strong connection that can sustain the pull-out forces upon it during rotation of the tire. The touch fasteners will be subject to various forces as the tire in which they are applied rotates, therefore a strong connection formed by the touch fastener configuration is required. As touch fasteners are pressure sensitive, the centrifugal force generated by the rotation of the tire can work to further secure the bond formed by the touch fastener configuration by compressing the two pieces of material further into each other. Reference will now be made in detail to the description of the embodiments as illustrated in the drawings, wherein like reference numbers indicate like parts throughout the several views.

In the following discussion, a general description of the system and its components is provided, followed by a discussion of the operation of the same. Although the following discussion provides illustrative examples of the operation of various components of the present invention, the use of the following illustrative examples does not exclude other implementations that are consistent with the principals disclosed by the following illustrative examples.

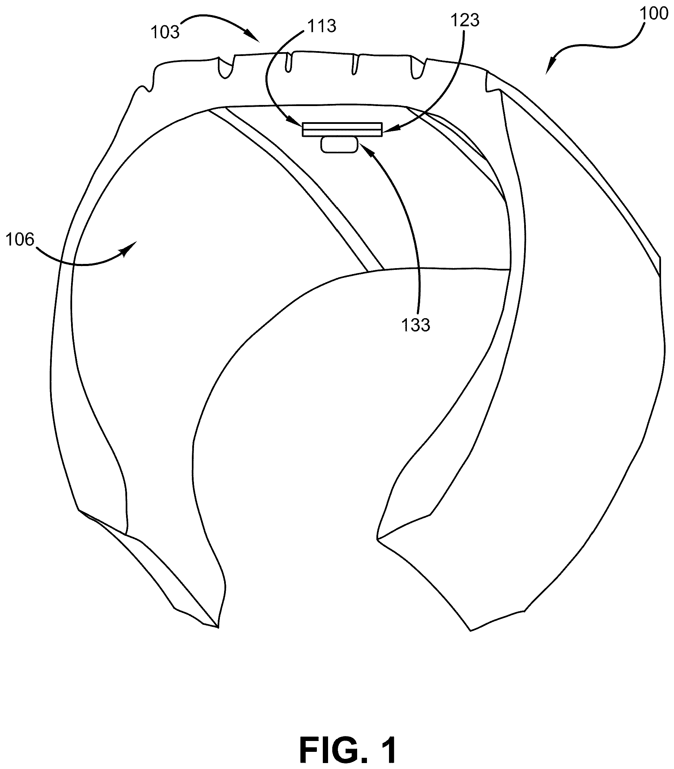

With reference to FIG. 1, shown is a cross-sectional view of a tire 100 with tread 103 and innerliner 106. According to various examples, a sensor unit 133 can be mounted on the innerliner 106 of the tire 100. In some examples, a first textured material 113 is affixed to the innerliner 106 of the tire 100. A second textured material 123 is affixed to the sensor unit 133. The first textured material 113 is fastened to the second textured material 123 by any touch fastener configuration described herein, mounting the sensor unit 133 on the innerliner 106 of the tire 100. In some examples, the tire 100 can include one or more of the mounted sensor units 133.

Turning to FIGS. 2A-2C, shown are various examples of an exploded view of the mounted sensor unit 133 on the innerliner 106. According to some examples, as shown in FIG. 2A, a first textured material 113 is affixed to the innerliner 106 via a first adhesive 219. Similarly, a second textured material 123 is affixed to a sensor unit 133 via a second adhesive 229. The first adhesive 219 and the second adhesive 229 can include at least one of a polyimide adhesive, a polyvinyl acetate adhesive, a cyanoacrylate adhesive, a polyurethane adhesive, an epoxy adhesive, an acrylic adhesive, a hot melt adhesive, a pressure-sensitive adhesive, an adhesive tape, a double adhesive tape, a rubber curing cement with cushion gum, and/or any other form of adhesive. The first adhesive 219 can be the same or different from the second adhesive 229.

The first textured material 113 can comprise a first fabric and the second textured material 123 can comprise a second fabric. The first fabric and the second fabric can include at least one of Nylon, polyester, aramid fiber (e.g., NOMEX^{®}, Kevlar^{®}, etc.), stainless steel, recycled material, or any combination thereof. The first fabric and the second fabric can include the same materials or different materials. The first textured material 113 also including a first texture 216 and the second textured material 123 also including a second texture 226 so that the sensor unit 133 can be mounted on the innerliner 106 of the tire 100 using any of the touch fastener configurations described herein. As the tire 100 will be subject to various forces and temperatures during rotation, adhesive selection should be carefully coordinated with fabric selection to ensure a strong bond is formed.

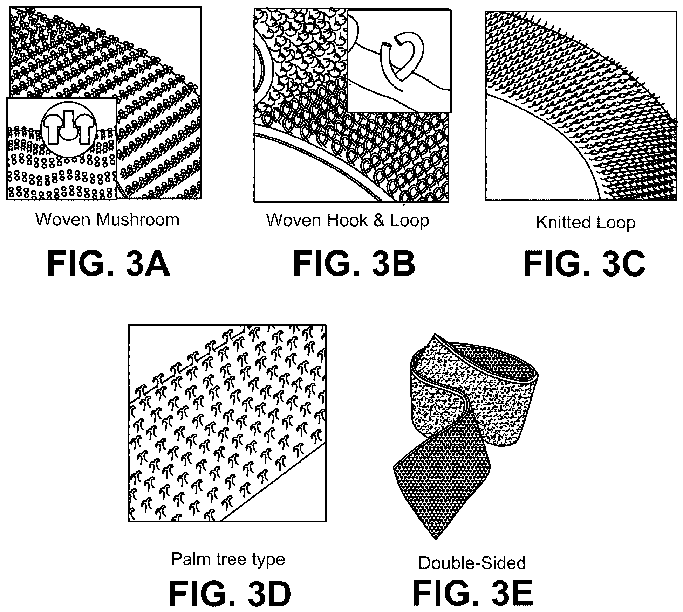

Another embodiment is exemplified in FIG. 2B. illustrating an innerliner 106 and a sensor unit 133 being directly affixed to a first textured material 113 and a second texture material 123, respectively. In various example, the innerliner 106 and/or the sensor unit 133 can be directly affixed to the first texture material 113 and/or the second texture material 123 via bonding. In various examples, this direct bonding can be achieved through interface bonding by, for example, a co-curing process. For example, the first textured material 113 can be co-cured on the innerliner 106. In this example, the first textured material 113 can be applied on a green tire and then co-cured to create a strong bonding during the tire curing process. In various examples, the backing surface of the first textured material 113 can be coated with or without an adhesive and/or a cushion layer 236 (FIG. 3C) prior to being applied to the green tire.

In various examples, the second textured material 123 can be directly affixed to the bottom of the sensor unit 133 using an overmolding process, a welding process, an injection process (*e*.*g*., injecting the second texture material 123 on a bottom surface of the sensor unit 133), etc. In some examples, the use of bonding eliminates the need for adhesives as exemplified in FIG. 2A. Similar to the adhesives, bonding method selection should be carefully considered in conjunction with the fabric selection to achieve a strong bond to sustain the various forces and temperatures applied to the tire. While both the first textured material 113 and the second textured material 123 can be affixed to the corresponding object via adhesive and/or bonding, in some examples, the first textured material 113 can be affixed via a bonding and the second textured material 123 can be affixed via an adhesive and/or vice versa. The sensor unit 133 is mounted onto the innerliner of the tire 100 through various touch fastener configurations embodied in the first textured material 113 and the second textured material 123.

Referring next to FIG. 2C, shown is an embodiment similar to FIG. 2A in that there are two layers of adhesives, a first adhesive 219 and a second adhesive 229. FIG. 2C further includes a cushion layer 236. In various examples, the cushion layer 236 can comprise a tape, a green rubber compound, a rubber compound (*e*.*g*., natural rubber, styrene butadiene rubber, nitrile rubber, butadiene rubber, rubber blends, *etc.*)*,* a foam pad, and/or other types of material that can function not only as a cushion between two layers but also a bonding between the two layers. In some examples, the cushion layer 236 is affixed to the innerliner 106 of the tire 100 through bonding and/or an additional adhesive layer. The cushion layer 236 is also affixed to a first textured material 113 including a first texture 216. Although FIG. 2C illustrates the cushion layer 236 being affixed to the first textured material 113 via a first adhesive 219, in some examples, the cushion layer 236 can be affixed to the first textured material 113 via bonding and/or other means of attachment. Similarly to FIG. 2A, a sensor unit 133 of FIG. 2C is affixed to a second textured material 123 including a second texture 226 through a second adhesive 229. However, although FIG. 2C illustrates the sensor unit 133 being affixed to the second textured material 123 via the second adhesive 229, in some examples, the sensor unit 133 is affixed to the second textured material 123 via bonding and/or other means of attachment. The sensor unit 133 is then mounted onto the innerliner 106 of the tire 100 by the touch fastener configuration enabled by the first texture 216 and the second texture 226.

Turning now to FIGS. 3A-3D, shown are some examples of texture configurations of touch fasteners. The textures are some of the touch fastener configurations that can be used by either the first texture 216 or the second texture 226 to affix the first textured material 113 to the second textured material 123. FIGS. 3A-3D are just a few examples of textures that can be used in the disclosed embodiment. These textures are employed as either the first texture 216 or the second texture 226 so that they fasten together, thereby affixing the first textured material 113 to the second textured material 123 via a touch fastener configuration. The first texture 216 and the second texture 226 can be at least any of the following touch fastener configurations: a mushroom configuration, a hook configuration (*e*.*g*., ALFA-LOK^{®}), a loop configuration, a knotted loop configuration, a palm tree configuration, or any other touch fastener configuration, or any combination thereof. The configuration of the first texture 216 must correspond to the configuration of the second texture 226 to establish a secure connection.

The use of the touch fastener configurations allows two surfaces to be fastened and unfastened. Advantageously, the sensor unit 133 can be easily replaced by unfastening the second textured material 123 from the first textured material 113, allowing for removal of the sensor unit 133. Easy removal of the sensor unit 133 allows for adjustments to be made to the tire 100, such as retreading, without endangering the integrity of the sensor unit 133. Reattachment of the sensor unit 133 or attachment of a sensor unit 133 can easily be achieved by following the method described in the present invention.

FIG. 3A shows an example of a woven mushroom configuration according to various examples. The mushroom configuration features mushroom-shaped stems. The mushroom configuration can be used in conjunction with a corresponding mushroom configuration or, for example, a loop configuration. When two pieces of material with the mushroom configuration texture are pushed together, a hook-to-hook fastening occurs as each mushroom head locks underneath the mushroom head of the other side, establishing an interlocked connection.

Another embodiment as exemplified in FIG. 3B is a woven hook and loop configuration according to various examples. Woven hook and loop is another form of touch fastener, with one side covered in hooks and the corresponding side being covered in loops. When pressure is applied to push the two corresponding textures together, the hooks can affix to the loops to fasten the pieces together. This fastening creates a temporary bond which can be undone, by pulling or peeling the two materials apart, to separate the two pieces.

Moving on to FIG. 3C, a knitted loop configuration is shown according to various examples. A knitted loop configuration includes many loops. As exhibited in FIG. 3B, this loop configuration can be used in conjunction with a loop configuration. It can also be used in conjunction with mushroom configurations, palm tree configurations, and many other touch fastener configurations. A knitted loop configuration can include various densities, textures, and size of filaments. As shown in FIG. 3B vs. FIG. 3C, a loop configuration can also be either woven or knitted.

FIG. 3D illustrates a palm tree configuration according to various examples. This configuration includes hooks with each hook molded or shaped into the shape of a palm tree. The palm tree shape of this configuration provides two hooks per protrusion, providing ample bonding opportunities for the corresponding texture. The palm tree configuration is most often paired with a loop configuration to form a bond. This configuration, as with other configurations, provides a strong bond that is still reusable, a key feature of touch fasteners.

FIG. 3E illustrates a double-sided configuration according to various examples. The double-sided configuration can employ any of the configurations described in FIG. 3A-D as well as any other touch fastener configuration. For example, both sides can embody loop configurations, both sides can embody hook configurations, one side can embody a loop configuration while the other side can embody a hook configuration or any other suitable combination of touch fastener configuration types. The purpose of using a double-sided configuration is to further improve the physical bonding strength through the mechanical interlocking mechanisms through co-curing, an overmolding process, a welding process, or an injection process in the following interphases: 1) Interphase between the first textured material 113 and the innerliner 106 of the tire 100 (or the cushion layer 236); 2) Interphase between the second textured material 123 and the sensor unit 133.

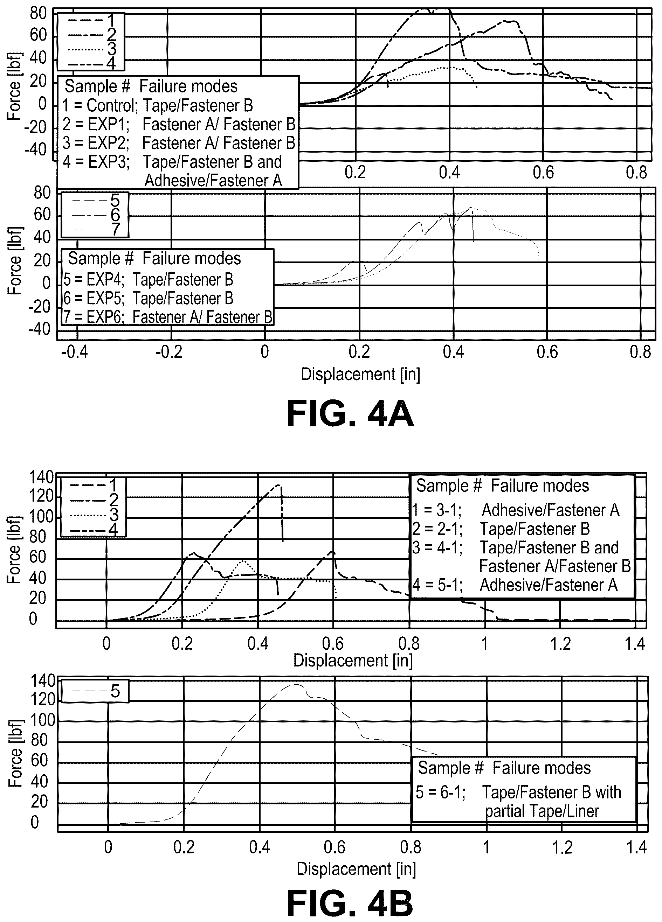

Turning now to FIGS. 4A and 4B, shown are experimental results of various touch fastener configurations and types of adhesives combinations. The displacement of the touch fasteners was measured in inches compared to the pull-out force measured in pound-force. The pull-out force measured the amount of force required to pull one side of the touch fastener out of the other side to break the bond in a 48mm diameter disk. The touch fasteners will be subject to various forces as the tire in which they are applied rotates. The centrifugal force generated by the rotation of the tire creates a force directed radially outward from the axis of rotation providing an additional compressed force on the textured material with each revolution. These experiments were conducted to determine the various suitable touch fastener configurations for the force experienced by an object mounted to a rotating tire.

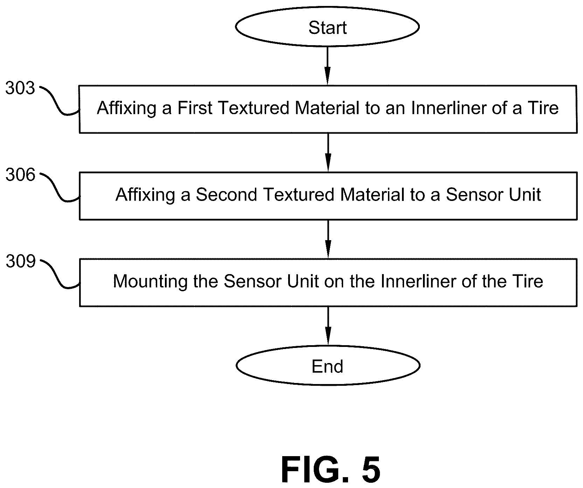

Referring next to FIG. 5, shown is a flowchart that provides one example of a method to mount a sensor unit 133 on the innerliner 106 of a tire 100. Beginning with block 303, a first textured material 113 is affixed on the innerliner 106 of the tire 100. In block 306, the second textured material 123 is affixed to the sensor unit 133. These bonds can be achieved through a first adhesive 219 and a second adhesive 229 and/or through co-curing, an overmolding process, a welding process, or an injection process. The first textured material 113 including a first texture 216 and the second textured material 123 including a second texture 226 that each include a touch fastener configuration corresponding to the other to form a bond. The touch fastener configuration of the first texture 216 and the second texture 226 will allow the sensor unit 133 to be mounted on the innerliner 106 of the tire 100 in block 309.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the diagram can be skipped or omitted. It is understood that all such variations are within the scope of the present invention.

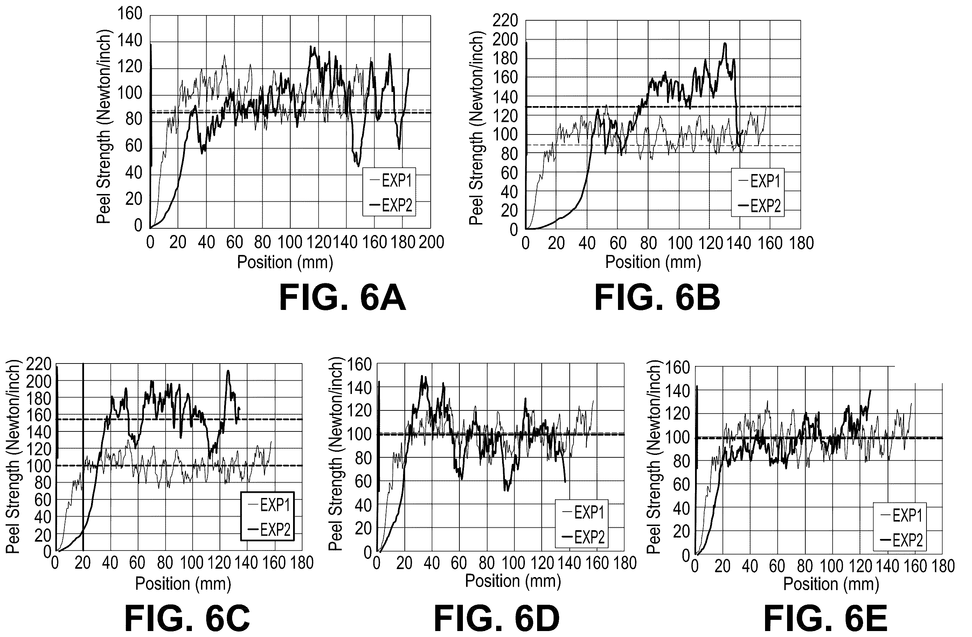

Turning now to FIGS. 6A-7, shown are example graphical representations of peel strength associated with experiments of a first textured material 113 cured on a green rubber. The parameters of the test are included in Table I:

**TABLE 1:**

| **Sample ID** | | **EXP1 (Control)** | **EXP2** | **EXP3** | **EXP4** | **EXP5** | **EXP6** |
|---|---|---|---|---|---|---|---|
| **Precure** | **First textured material 113** | **Velcro Loop 1000** | | | **No Precured** | | |
| | **Rubber/Fabric Adhesive 219** | | **No** | **Yes** | | | |
| | **Bonding layer 236** | | **Rubber 1** | | | | |
| | **Cure time (min) @150C** | | **15** | | | | |
| | **Curing pressure** | | **Very low** | | | | |
| **Full Cure** | **First textured material 113** | | | | **Velcro Loop 1000** | | |
| | **Rubber/Fabric Adhesive 219** | | | | **No** | | **Yes** |
| | **Bonding layer 236** | | | | **No** | **Rubber 2** | |
| | **Innerliner 106** | | **An innerliner compound** | | | | |
| | **Fabric backing (reinforcement)** | | **Yes** | | | | |
| | **Cure time (min) @150C** | | **40** | | | | |
| | **Curing pressure** | | **150 Psi** | | | | |
| **Test** | **Second textured material 123** | **Hook 87S** | | | | | |
| | **Peel Strength test** | **T- Peel test at room temperature** | | | | | |

In the experiments with precured samples, an adhesive 219 was applied on the backing fabric of the first textured material 113, when applicable. After the adhesive 219 dried, the bonding layer (e.g., cushion layer 236) was added, when applicable. The fabric was partially cured to the green rubber at a temperature of 150°C and very low press for about 15 minutes.

In experiments of fully cured samples from pre-cured samples, a green sheet of an innerliner compound was added on the pre-cured samples and a fabric-reinforced layer (e.g., ply) was added on the innerliner surface. Then the samples were fully cured at a temperature of 150°C and a pressure of 1.03 MPa for about 40 minutes inside a blade mold.

In experiments of fully cured samples without the pre-cured samples, an adhesive 219 was applied on the backing fabric of the first textured material 113, when applicable. After the adhesive 219 dried, the bonding layer (*e.g.,* cushion layer 236) was added, when applicable. A green sheet of an innerliner compound was then added on the pre-cured samples and a fabric-reinforced layer (*e.g.,* ply) was added on the innerliner surface. Then the samples were fully cured at a temperature of 150°C and a pressure of 1.03 MPa for about 40 minutes inside blade mold.

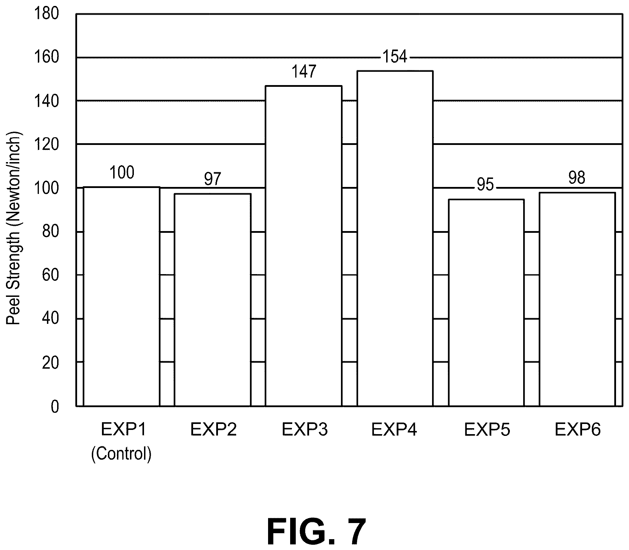

FIGS. 6A-6E illustrate graphical representations of the peel strength associated with the different experimental parameters with EXP 1 corresponding to the control setup. FIG. 6A illustrates a graphical representation of the peel strength performance for EXP2 comparted to EXP 1. FIG. 6B illustrates a graphical representation of the peel strength performance for EXP3 comparted to EXP 1. FIG. 6C illustrates a graphical representation of the peel strength performance for EXP3 comparted to EXP 1. FIG. 6D illustrates a graphical representation of the peel strength performance for EXP4 comparted to EXP 1. FIG. 6E illustrates a graphical representation of the peel strength performance for EXP5 comparted to EXP 1. FIG. 7 illustrates a graphical representation comparing the results of the different experiments. The preliminary results show that all of the samples with the loop fastener cured on the innerliner with or without adhesive and with or without a bonding layer against the hoop fastener were equal or better than the original peel strength from the loop fastener and hook fastener.

In addition to the foregoing, the various embodiments of the present invention include, but are not limited to, the embodiments set forth in the following clauses.

Clause 1 - A method, comprising: affixing a first textured material to an innerliner of a tire; affixing a second textured material to a sensor unit; and mounting the sensor unit on the innerliner of the tire by fastening the first textured material to the second textured material via a touch fastener configuration.

Clause 2 - The method of clause 1, wherein the first textured material comprises a first fabric and the second textured material comprises a second fabric, the first fabric and the second fabric comprising at least one of Nylon, polyester, aramid fiber, stainless steel, recycled material, or any combination thereof.

Clause 3 - The method of clause 2, wherein the first fabric differs from the second fabric.

Clause 4 - The method of any one of clauses 1-3, wherein a first texture of the first textured material and a second texture of the second textured material correspond to a touch fastener configuration comprising at least one of a mushroom configuration, a hook configuration, a loop configuration, a knotted loop configuration, a palm tree configuration, or any combination thereof, the first texture being configured to fasten to the second texture.

Clause 5 - The method of any one of clauses 1-4, wherein the first textured material is affixed to the innerliner of the tire via a first adhesive and the second textured material is affixed to the sensor unit via a second adhesive.

Clause 6 - The method of clause 5, wherein the first adhesive differs from the second adhesive.

Clause 7 - The method of any one of clauses 5 or 6, wherein the first adhesive and the second adhesive comprise at least one of: a polyimide adhesive, a polyvinyl acetate adhesive, a cyanoacrylate adhesive, a polyurethane adhesive, an epoxy adhesive, an acrylic adhesive, a hot melt adhesive, a pressure-sensitive adhesive, an adhesive tape, a double adhesive tape, or a rubber curing cement with cushion gum.

Clause 8 - The method of any one of clauses 1-4, wherein the first textured material is affixed to the innerliner of the tire using a co-curing process.

Clause 9 - The method of any one of clauses 1-4, wherein the second textured material is affixed to the sensor unit using at least one of: an overmolding process, a welding process, or an injection process.

Clause 10 - The method of any one of clauses 1-4, further comprising adding a cushion layer between the innerliner of the tire and the first textured material.

Clause 11 - A tire, comprising: an innerliner; a sensor unit mounted to the innerliner; a first textured material affixed to the innerliner; and a second textured material affixed to the sensor unit and the first textured material, wherein the sensor unit is mounted on the innerliner of the tire by fastening the first textured material to the second textured material via a touch fastener configuration.

Clause 12 - The tire of clause 11, wherein the first textured material comprises a first fabric and the second textured material comprises a second fabric, the first fabric and the second fabric comprising at least one of nylon, polyester, aramid fiber, stainless steel, recycled material, or any combination thereof.

Clause 13 - The tire of any one of clauses 11 or 12, wherein the first fabric differs from the second fabric.

Clause 14 - The tire of any one of clauses 11-13, wherein a first texture of the first textured material and a second texture of the second textured material correspond to a touch fastener configuration comprising at least one of a mushroom configuration, a hook configuration, a loop configuration, a knotted loop configuration, a palm tree configuration, or any combination thereof, the first texture being configured to fasten to the second texture.

Clause 15 - The tire of any one of clauses 11-14, wherein the first textured material is affixed to the innerliner via a first adhesive and the second textured material is affixed to the sensor unit via a second adhesive.

Clause 16 - The tire of clause 15, wherein the first adhesive differs from the second adhesive.

Clause 17 - The tire of any one of clauses 15 or 16, wherein the first adhesive and the second adhesive comprise at least one of: a polyimide adhesive, a polyvinyl acetate adhesive, a cyanoacrylate adhesive, a polyurethane adhesive, an epoxy adhesive, an acrylic adhesive, a hot melt adhesive, a pressure-sensitive adhesive, an adhesive tape, a double adhesive tape, or a rubber curing cement with cushion gum.

Clause 18 - The tire of any one of clauses 11-14, wherein the first textured material is affixed to the innerliner using a co-curing process.

Clause 19 - The tire of any one of 11-14, wherein the second textured material is affixed to the sensor unit using at least one of: an overmolding process, a welding process, or an injection process.

Clause 20 - The tire of any one of 11-14, further comprising a cushion layer between the innerliner of the tire and the first textured material.

## Claims

1. A method comprising: affixing a first textured material (113) to an innerliner (106) of a tire (100); affixing a second textured material (123) to a sensor unit (133); and mounting the sensor unit (133) on the innerliner (106) of the tire (100) by fastening the first textured material (113) to the second textured material (123) via a touch fastener configuration.

2. The method of claim 1, wherein the first textured material (113) comprises a first fabric and the second textured material (123) comprises a second fabric, the first fabric and the second fabric comprising at least one of Nylon, polyester, aramid fiber, stainless steel, recycled material, or any combination thereof, the first fabric optionally differing from the second fabric.

3. The method of claim 1 or 2 wherein a first texture (216) of the first textured material (113) and a second texture (226) of the second textured material (123) correspond to the touch fastener configuration comprising at least one of a mushroom configuration, a hook configuration, a loop configuration, a knotted loop configuration, a palm tree configuration, a double-sided configuration, or any combination thereof, the first texture (216) being configured to fasten to the second texture (226).

4. The method of at least one of the previous claims, wherein the first textured material (113) is affixed to the innerliner (106) of the tire (100) via a first adhesive (219) and the second textured material (123) is affixed to the sensor unit (133) via a second adhesive (229), the first adhesive (219) optionally differing from the second adhesive (229).

5. The method of claim 4, wherein the first adhesive (219) and/or the second adhesive (229) comprise at least one of: a polyimide adhesive, a polyvinyl acetate adhesive, a cyanoacrylate adhesive, a polyurethane adhesive, an epoxy adhesive, an acrylic adhesive, a hot melt adhesive, a pressure-sensitive adhesive, an adhesive tape, a double adhesive tape, or a rubber curing cement with cushion gum.

6. The method of at least one of the previous claims, wherein the first textured material (113) is affixed to the innerliner (106) of the tire (100) during tire curing processing.

7. The method of at least one of the previous claims, wherein the second textured material (123) is affixed to the sensor unit (133) using at least one of: an overmolding process, a welding process, or an injection process.

8. The method of at least one of the previous claims, further comprising adding a cushion layer between the innerliner (106) of the tire (100) and the first textured material (113).

9. A tire comprising an innerliner (106), a sensor unit (133), a first textured material affixed to the innerliner (113), and a second textured material (123) affixed to the sensor unit (133) and the first textured material (133), wherein the sensor unit (133) is mounted on the innerliner (106) of the tire (100) by fastening the first textured material (113) to the second textured material (123) via a touch fastener configuration.

10. The tire of claim 9, wherein the first textured material (113) comprises a first fabric and the second textured material (123) comprises a second fabric, the first fabric and the second fabric comprising at least one of nylon, polyester, aramid fiber, stainless steel, recycled material, or any combination thereof, and, optionally, wherein the first fabric differs from the second fabric.

11. The tire of claim 9 or 10, wherein a first texture (216) of the first textured material (113) and a second texture (226) of the second textured material (123) correspond to the touch fastener configuration comprising at least one of a mushroom configuration, a hook configuration, a loop configuration, a knotted loop configuration, a palm tree configuration, a double-sided configuration, or any combination thereof, the first texture (216) being fastened to the second texture (226).

12. The tire of at least one of the claims 9 to 11, wherein the first textured material (113) is affixed to the innerliner (106) via a first adhesive (219) and the second textured material (123) is affixed to the sensor unit (133) via a second adhesive (229), and, optionally, wherein the first adhesive (219) differs from the second adhesive (229).

13. The tire of at least one of the claims 9 to 12, wherein the first adhesive (219) and/or the second adhesive (229) comprise at least one of: a polyimide adhesive, a polyvinyl acetate adhesive, a cyanoacrylate adhesive, a polyurethane adhesive, an epoxy adhesive, an acrylic adhesive, a hot melt adhesive, a pressure-sensitive adhesive, an adhesive tape, a double adhesive tape, or a rubber curing cement with cushion gum.

14. The tire of at least one of the claims 9 to 12, wherein the first textured material (216) is affixed to the innerliner (106) during a tire cure processing; and/or wherein the second textured material (226) is affixed to the sensor unit (133) using at least one of: an overmolding process, a welding process, or an injection process.

15. The tire of at least one of the claims 9 to 14, further comprising a cushion layer between the innerliner (106) of the tire (100) and the first textured material (113).
